(19) Europäisches Patentamt
European Patent Office
Office européen des brevets

(11) **EP 3 467 328 A1**

(12) **EUROPEAN PATENT APPLICATION**
published in accordance with Art. 153(4) EPC

(43) Date of publication:
**10.04.2019 Bulletin 2019/15**

(21) Application number: **17806805.2**

(22) Date of filing: **01.06.2017**

(51) Int Cl.:
**F16C 33/10** (2006.01)    **F16C 33/20** (2006.01)

(86) International application number:
**PCT/JP2017/020486**

(87) International publication number:
**WO 2017/209255 (07.12.2017 Gazette 2017/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **01.06.2016 JP 2016110130**

(71) Applicant: **Toyo Seikan Group Holdings, Ltd.**
**Shinagawa-ku**
**Tokyo 141-8627 (JP)**

(72) Inventors:
• **WATANABE, Kazunobu**
**Yokohama-shi**
**Kanagawa 240-0062 (JP)**

• **ENOKIDO, Toshinori**
**Yokohama-shi**
**Kanagawa 240-0062 (JP)**
• **SEGAMI, Kouta**
**Yokohama-shi**
**Kanagawa 240-0062 (JP)**
• **KOBAYASHI, Yusuke**
**Yokohama-shi**
**Kanagawa 240-0062 (JP)**

(74) Representative: **J A Kemp**
**14 South Square**
**Gray's Inn**
**London WC1R 5JJ (GB)**

(54) **SLIDING STRUCTURE AND METHOD FOR PRODUCING SAME**

(57)    The present invention relates to a structure including a sliding layer that is formed on a roughened surface of a substrate and that has an excellent slidability, and a method for producing the structure. The sliding layer is formed of a powder of a carbon-composition-containing resin composition filled in at least concavities of roughness on the roughened surface.

**Fig. 1**

EP 3 467 328 A1

**Description**

Technical Field:

The present invention relates to a slidable structure and a method for producing the same. More specifically, the present invention relates to a slidable structure including a sliding layer having excellent slidability. The present invention further relates to a method for forming efficiently the sliding layer on a structure.

Background Art:

A fiber reinforced plastic prepared by blending a functional fiber such as a carbon fiber into a resin is excellent in not only wear resistance and self-lubricity but also heat resistance and chemical resistance, and thus, use of the plastic as a sliding member of a rolling element or the like has been proposed (Patent document 1). However, formation of a sliding member using the fiber reinforced plastic alone may result in unsatisfactory effect from the viewpoint of load resistance and the like, though it depends on application of the sliding member.

Another type of sliding member is a composite sliding member prepared by forming a porous layer integrally on a surface of a metal sheet and impregnate-coating the porous layer with a composition capable of exhibiting slidability. For example, Patent document 2 below describes a multilayer sliding member. The member is prepared by forming a porous layer on a surface of a metal back plate, and impregnate-coating the porous layer with an impregnation-coating resin composition including a polyimide resin, a polyphenylene sulfide resin, granular inorganic filler having an average particle diameter of 8 to 40 $\mu$m, a carbon fiber, and polytetrafluoroethylene.

Patent document 3 below describes a multiple layer sliding member. The sliding member is prepared by forming integrally a porous metal sintered layer of a metal sintered member on a surface of a back metal formed of a steel sheet, and impregnate-coating the layer with a resin composition containing synthetic resin such as fluorocarbon polymer as a main component and an organic material such as polyimide as a wear resistance improver.

Prior Art Documents:

Patent Documents:

Patent Document 1: JP-A-2011-127636
Patent Document 2: JP-A-2009-79766
Patent Document 3: JP-A-2011-80525

Summary of the Invention:

Problems to be solved by the invention:

Each of the above-described multilayer sliding members is produced by forming in advance a porous layer on a metal sheet, preparing a composition capable of exhibiting slidability, supplying the composition to the porous layer, and then applying heat and pressure to impregnate and coat the porous layer with the composition. This process requires numbers of steps, and thus, it may result in inferior productivity.

Therefore, an object of the present invention is to provide a slidable structure having a sliding layer formed on a substrate, where the sliding layer includes a resin composition containing a carbon composition having slidability, such as a carbon fiber.

Another object of the present invention is to provide a method for forming efficiently the sliding layer on a substrate.

Means for solving the problems:

The present invention provides a structure including a sliding layer formed on a roughened surface of a substrate, wherein the sliding layer includes a powder of a carbon-composition-containing resin composition filled in at least concavities of roughness on the roughened surface. It is preferable in the structure of the present invention that:

1. the carbon composition is selected from the group consisting of a carbon fiber, graphite, and a powdery carbon-based material;

2: the carbon-composition-containing resin composition contains an addition-reaction type polyimide resin as a base resin;

3: the sliding layer contains at least one selected from the group consisting of molybdenum disulfide, an ethylene tetrafluoride resin, and a metal powder;

4: the roughened surface has arithmetic mean surface roughness (Ra) in a range of 0.4 to 0.8;

5: at least the roughened surface of the substrate comprises any of stainless steel, an iron-based material, and an aluminum alloy; and

6: the arithmetic mean surface roughness (Ra) of the sliding layer is less than 0.4.

The present invention provides also a method for producing a structure including a sliding layer on a roughened surface of a substrate, the method comprising: pressure-welding a compact of a carbon-composition-containing resin composition on the roughened surface of the substrate for transferring a powder of the carbon-composition-containing resin composition onto the roughened surface so as to form the sliding layer.

It is preferable in the method for producing a structure of the present invention that:

1. the roughened surface and the compact of the carbon-composition-containing resin composition are rubbed with each other in the pressure-welding; and

2. the roughened surface has arithmetic mean roughness (Ra) in a range of 0.4 to 0.8.

Effects of the invention:

According to the present invention, it is possible to form a sliding layer on a structure simply by rubbing a roughened surface of a substrate with a carbon-composition-containing resin composition under pressure. This requires fewer steps in comparison with production of a conventional multilayer sliding member, and it is extremely efficient. In addition, the carbon-composition-containing composition to form the sliding layer, which is transferred to fill at least the concavities on the surface of the structure, may not be easily detached from the structure. Namely, it exhibits excellent durability when used as a sliding member.

Further, the addition-reaction type polyimide resin is used for the base resin of the carbon-composition-containing resin composition to constitute the sliding layer. As a result, it is possible to obtain a structure that is excellent in not only slidability but also heat resistance, durability and mechanical strength.

Brief Description of the Drawings:

[Fig. 1] is a cross-sectional view of a structure of the present invention.

[Fig. 2] is a view for illustrating an example of a method for forming a sliding layer of a structure of the present invention.

[Fig. 3] is a view for illustrating another example of a method for forming a sliding layer of a structure of the present invention.

[Fig. 4] is a view for illustrating a testing method for sliding wear resistance in Examples.

[Fig. 5] is a diagram for illustrating a method for measuring an average wear area.

[Fig. 6] is a diagram for illustrating a method for calculating a specific wear amount.

[Fig. 7] is a view showing a site of a specimen to be observed microscopically after a wear test in any of Examples and Comparative Examples.

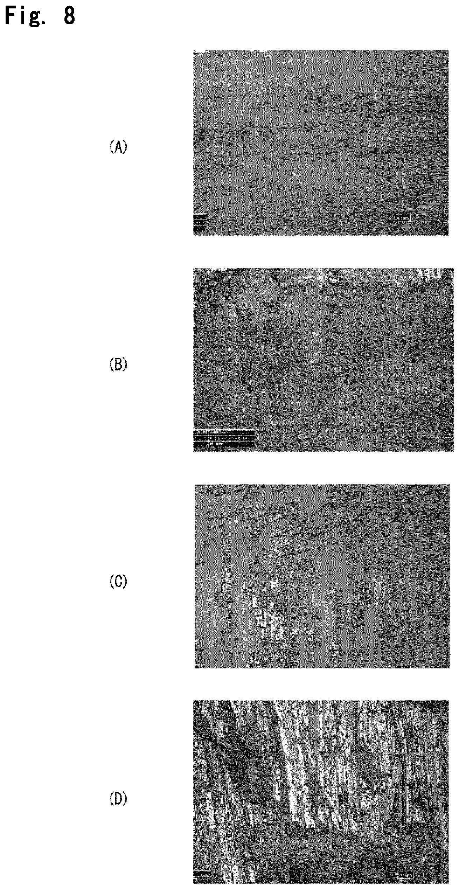

[Fig. 8] is composed of photographs showing surfaces of sliding layers of specimens observed microscopically after a wear test in Examples 1, 2 and Comparative Examples 1, 2.

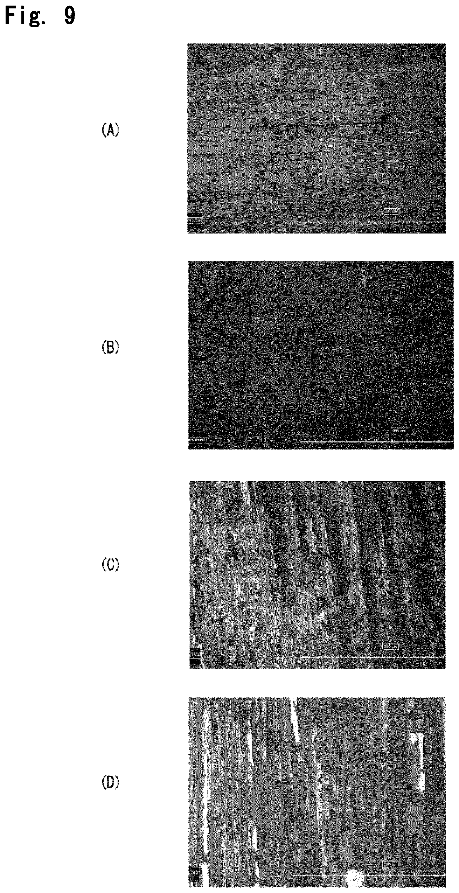

[Fig. 9] is composed of photographs showing surfaces of sliding layers of specimens observed microscopically after a wear test in Examples 3, 4 and Comparative Examples 3, 4.

Mode for Carrying Out the Invention:

(Slidable structure)

A structure of the present invention has a substrate having a roughened surface and a sliding layer formed on the roughened surface. Its essential feature is that the sliding layer is composed of a powder of a carbon-composition-containing resin composition, this carbon-composition-containing resin composition is filled in at least concavities of the roughened surface, and preferably, the sliding layer coats the entire roughness and is fixed onto the substrate.

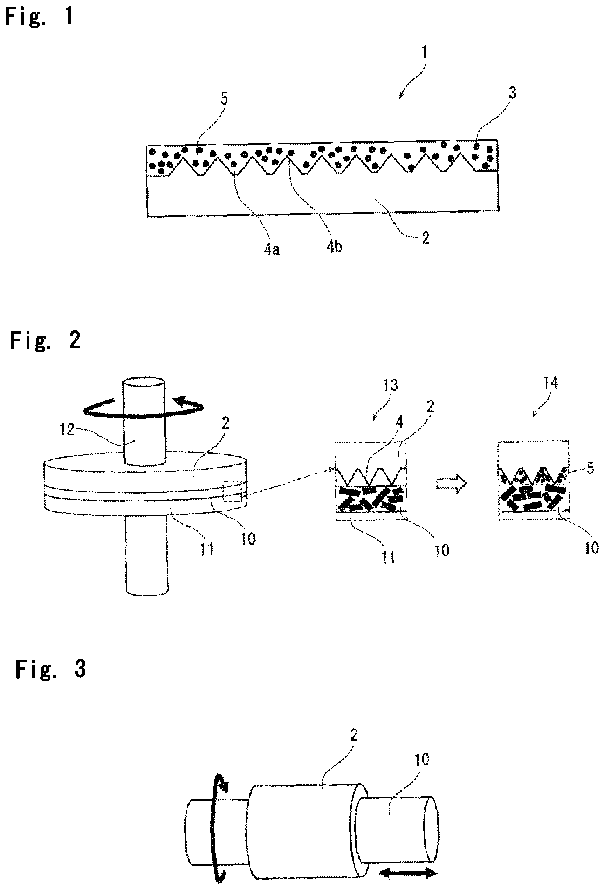

Fig. 1 is a cross-sectional view for illustrating the feature of the structure of the present invention. A structure 1 is composed of a substrate 2 having a roughened surface and a sliding layer 3 provided to cover the roughened surface of the substrate. The sliding layer 3 is formed of a powder cluster 5 of a carbon-composition-containing resin composition. The powder is filled into concavities 4a on the roughened surface and fixed onto convexities 4b to cover the substrate surface.

Though the thickness of the sliding layer in the present invention may vary depending on the use or the like and the general definition may be difficult, the thickness is at least equal to or greater than the depth of the concavities on the roughened surface formed on the substrate. Further, as described above, since it is preferable for the sliding layer to uniformly cover the roughened surface, the surface of the sliding layer is preferably made smooth to have arithmetic mean surface roughness (Ra) of less than 0.4.

The structure of the present invention is not limited particularly as long as it has a sliding layer having the aforementioned features and formed on the surface of the structure, and the sliding layer serves as a sliding surface with respect to a mating material. Namely, the substrate may be disc-like, bush-like, spherical and the like.

[Carbon composition]

In the carbon-composition-containing resin composition used in the present invention, any of a carbon fiber, graphite, and a powdery carbon-based material can be used preferably as the carbon composition. The carbon composition has high strength and elasticity. Furthermore, due to its high thermal conductivity, it can dissipate efficiently heat generated by friction so as to provide a stable slidability.

Examples of the carbon fiber include a PAN-based carbon fiber containing polyacrylonitrile (PAN) as a main material, a tar pitch-based carbon fiber containing tar pitch as a main material, and a rayon-based carbon fiber. In particular, a carbon fiber having an average fiber length in a range of 50 to 6000 $\mu$m and an average fiber diameter in a range of 5 to 20 $\mu$m can be used preferably.

In addition to the carbon fiber, an electroconductive filler such as graphite, or a carbon fiber having a fiber length of not more than 500 nm or a powdery carbon-based material such as carbon black can be used.

It is preferable from the viewpoint of slidability that the carbon composition is contained in an amount of 5 to 200 parts by weight, particularly 10 to 150 parts by weight relative to 100 parts by weight of a base resin. When the amount of the carbon composition is smaller than this range, a satisfactory slidability cannot be obtained. When the amount is larger than the range, the sliding layer may not be fixed to the substrate, making it difficult to exhibit a desired slidability.

[Base resin]

In the present invention, a base resin in which the carbon composition is blended may be a synthetic resin conventionally used for carbon fiber enforced plastics or the like. The examples include polycarbonate, polypropylene, an acrylic resin, polyoxyethylene, polyethylene, polystyrene, polyether ether ketone, polyether imide, a tetrafluoroethylene resin, polyvinylidene fluoride, polyamide, polyimide, polyamide imide, polyethylene terephthalate, polyphenylene sulfide, polybutylene terephthalate, an acrylonitrile•styrene-acrylate copolymer, an acrylonitrile•butadiene•styrene copolymer, polyethersulfone, and a tetrafluoroethylene•ethylene copolymer. In the present invention, addition-reaction type polyimides can be used particularly preferably.

The addition-reaction type polyimide resin that is used particularly preferably in the present invention is formed of an aromatic polyimide oligomer having an addition-reaction group at the end, and the polyimide resin is prepared by a conventionally known method. For example, an aromatic tetracarboxylic dianhydride, an aromatic diamine, and a compound having in the molecule either an anhydride group or an amino group together with an addition-reaction group may be used such that the total of the equivalents of the respective acid groups and the total of the respective amino groups are almost the same. Preferably, the components are allowed to react in a solvent to easily obtain the polyimide resin. In an example of the reaction, an oligomer having an amino acid bond is formed through polymerization for 0.1 to 50 hours at a temperature of not higher than 100°C, preferably not higher than 80°C, which is then chemically imidized with an imidization agent. Another method consists of two steps of heating at a high temperature in a range of about 140°C to about 280°C and imidizing thermally. A still other method consists of a single step of conducting a polymerization•imidization reaction for 0.1 to 50 hours while keeping a high temperature in a range of 140 to 280°C from the beginning.

Solvents used preferably in the reactions are organic polar solvents, and the examples include N-methyl-2-pyrrolidone, N,N-dimethylformamide, N,N-dimethylacetamide, N,N-diethylacetamide, $\gamma$-butyrolactone, and N-methylcaprolactam, though the present invention is not limited to these examples.

In the present invention, the addition-reaction group at the end of the aromatic imide oligomer is not limited particularly as long as it is a group to conduct a curing reaction (addition-polymerization reaction) by heating. From the viewpoint of preferable curing reaction and favorable heat resistance of the thus obtained cured product, the group is preferably a reaction group of any selected from a phenylethynyl group, an acetylene group, a nadic acid group, and a maleimide group. Among them, the phenylethynyl group is particularly preferred since it generates no gaseous component by the curing reaction, and it is excellent in heat resistance and mechanical strength.

These addition-reaction groups may be introduced into an end of an aromatic imide oligomer by a reaction, preferably a reaction to form an imide ring. The reaction occurs between either an amino group or an acid anhydride group at an end of the aromatic imide oligomer and a compound having in the molecule either an anhydride group or an amino group together with the addition-reaction group.

Preferable examples of the compound having in the molecule either an anhydride group or an amino group together with the addition-reaction group include 4-(2-phenylethynyl) phthalic anhydride, 4-(2-phenylethynyl)aniline, 4-ethynyl-phthalic anhydride, 4-ethynylaniline, nadic anhydride, and maleic anhydride.

Examples of the tetracarboxylic acid component for forming an aromatic imide oligomer having an addition-reaction group at the end include at least one tetracarboxylic acid dianhydride selected from the group consisting of 2,3,3',4'-biphenyltetracarboxylic dianhydride, 2,2',3,3'-biphenyltetracarboxylic dianhydride, 3,3',4,4'-biphenyltetracarboxylic acid dianhydride, and 3,3',4,4'-benzophenonetetracarboxylic dianhydride. Among them, 2,3,3',4'-biphenyltetracarboxylic dianhydride can be used particularly preferably.

Examples of the diamine component to form an aromatic imide oligomer having an addition-reaction group at the end include: an amine having one benzene ring, such as 1,4-diaminobenzene, 1,3-diaminobenzene, 1,2-diaminobenzene, 2,6-diethyl-1,3-diaminobenzene, 4,6-diethyl-2-methyl-1,3-diaminobenzene, 3,5-diethyltoluene-2,4-diamine, and 3,5-diethyltoluene-2,6-diamine; a diamine having two benzene rings, such as 4,4'-diaminodiphenyl ether, 3,4'-diaminodiphenyl ether, 3,3'-diaminodiphenyl ether, 3,3'-diaminobenzophenone, 4,4'-diaminobenzophenone, 4,4'-diaminodiphenylmethane, 3,3'-diaminodiphenylmethane, bis(2,6-diethyl-4-aminophenoxy)methane, bis(2-ethyl-6-methyl-4-aminophenyl)methane, 4,4'-methylene-bis(2,6-diethylaniline), 4,4'-methylene-bis(2-ethyl,6-methylaniline), 2,2-bis(3-aminophenyl)propane, 2,2-bis(4-aminophenyl)propane, benzidine, 2,2'-bis(trifluoromethyl)benzidine, 3,3'-dimethylbenzidine, 2,2-bis(4-aminophenyl)propane, and 2,2-bis(3-aminophenyl)propane; a diamine having three benzene rings, such as 1,3-bis(4-aminophenoxy)benzene, 1,3-bis(3-aminophenoxy)benzene, 1,4-bis(4-aminophenoxy)benzene, and 1,4-bis(3-aminophenoxy)benzene; and a diamine having four benzene rings, such as 2,2-bis[4-[4-aminophenoxy]phenyl]propane and 2,2-bis[4-[4-aminophenoxy]phenyl]hexafluoropropane, though the present invention is not limited to these examples. They may be used alone or in combination of two or more.

Among them, it is preferable to use a mixed diamine formed of at least two aromatic diamines selected from the group consisting of 1,3-diaminobenzene, 1,3-bis(4-aminophenoxy)benzene, 3,4'-diaminodiphenyl ether, 4,4'-diaminodiphenyl ether, and 2,2'-bis(trifluoromethyl)benzidine. In particular, from the viewpoint of heat resistance and formability, it is preferable to use a mixed diamine consisting of a combination of 1,3-diaminobenzene and 1,3-bis(4-aminophenoxy)benzene; a mixed diamine consisting of a combination of 3,4'-diaminodiphenyl ether and 4,4'-diaminodiphenyl ether; a mixed diamine consisting of a combination of 3,4'-diaminodiphenyl ether and 1,3-bis(4-aminophenoxy)benzene; a mixed diamine consisting of a combination of 4,4'-diaminodiphenyl ether and 1,3-bis(4-aminophenoxy)benzene; and a mixed diamine consisting of a combination of 2,2'-bis(trifluoromethyl)benzidine and 1,3-bis(4-aminophenoxy)benzene.

It is preferable for an aromatic imide oligomer having an addition-reaction group at the end that the number of the repeat units of the imide oligomer is more than 0 and not more than 20, particularly in a range of 1 to 5, and the number average molecular weight in terms of styrene by GPC is not more than 10000, particularly not more than 3000. When the number of the repeat units is within the range, the melt viscosity is adjusted to be within an appropriate range, and the carbon composition can be contained homogeneously. The formability is also excellent since there is no necessity of forming at high temperature.

The number of the repeat units can be adjusted by changing the rates of the aromatic tetracarboxylic acid dianhydride, aromatic diamine, and the compound having in the molecule either an anhydride group or an amino group together with an addition-reaction group. Raising the rate of the compound having in the molecule either an anhydride group or an amino group together with an addition-reaction group may result in a low molecular weight, and the number of the repeat units may be decreased. Decreasing the rate of the compound may result in a high molecular weight, and the number of the repeat units may be increased.

Depending on the use of the target sliding member, the addition-reaction type polyimide resin can be blended with resin additives such as a flame retardant, a colorant, a lubricant, a heat stabilizer, a light stabilizer, an ultraviolet absorber, filler, and a thickener in accordance with any known method.

[Other additives]

It is preferable that at least one of molybdenum disulfide, a tetrafluoroethylene resin, and a metal powder such as an aluminum powder and a copper powder is blended in the carbon-composition-containing resin composition of the present invention in order to further enhance the slidability. These may be contained in an amount of 5 to 40 parts by weight relative to 100 parts by weight of the base resin.

[Substrate]

In the present invention, the sliding layer is formed of a compact composed of a carbon-composition-containing resin composition. The compact is scraped on the roughened surface of the substrate, and the thus formed powder is filled in the concavities of the roughened surface and applied with pressure as clarified from the following method for producing the structure of the present invention. This indicates that the substrate for constituting the structure of the present invention is required to have a sufficient stiffness to scrape the compact formed of the carbon-composition-containing resin composition. From the viewpoint, the substrate can be formed by using an iron-based material such as a stainless steel and a rolled steel sheet, cemented carbide, and an aluminum alloy.

The sliding layer is formed by scraping the compact of the carbon-composition-containing resin composition to provide a powder and further by filling the concavities of the substrate surface with the carbon-composition-containing resin composition. Therefore, it is preferable that the surface of the substrate is roughened to have arithmetic mean roughness (Ra) in a range of 0.4 to 0.8, and particularly 0.5 to 0.7. When the surface roughness is smaller than the above-described range, the powder may not be transferred sufficiently to the surface of the substrate in comparison with a case where the surface roughness is within the range. In contrast, the surface roughness greater than the above-described range is advantageous for pulverizing the compact. However, it may be difficult to fill the powder in the deep concavities and pressure-bond the powder in comparison with a case where the surface roughness is within the range.

(Method of producing structure)

As described above, the powder of the carbon-composition-containing resin composition is filled in at least the concavities of the roughened surface of the substrate to form a sliding layer of the structure of the present invention. Alternatively, the structure can be formed by pulverizing in advance the carbon-composition-containing resin composition using a conventionally known pulverizer, filling the powder in the concavities of the roughened surface, and then applying pressure and heat to form the sliding layer. However, it is desirable that the sliding layer is formed by rubbing the compact composed of the carbon-composition-containing resin composition on the surface of the substrate under pressure, thereby transferring the powder of the composition-containing resin composition onto the roughened surface to form the sliding layer. In the method, the powder of the carbon-composition-containing resin composition is rubbed on the roughened surface so as to generate friction heat. Due to the friction heat and applied pressure, the powder of the carbon-composition-containing resin composition becomes a stable film on the roughened surface. This film may be pressure-bonded more firmly on the roughened surface in comparison with a case where a powder formed in advance is filled and applied with pressure. This serves to prevent or decrease detachment of the sliding layer, and to provide a remarkable productivity.

[Compact composed of carbon-composition-containing resin composition]

The compact composed of the carbon-composition-containing resin composition can be formed by any method selected suitably according to the type of the base resin in use or the shape of the structure. Examples of the method include compression molding, transfer molding, injection molding and extrusion molding.

An addition-reaction type polyimide resin may be used most preferably as the base resin. When this addition-reaction type polyimide resin is used, a prepolymer of the addition-reaction type polyimide resin, the carbon composition and any other additive are heated at a temperature not lower than the melting point of the addition-reaction type polyimide resin and kneaded while melting the prepolymer, thereby mixing the prepolymer with the carbon composition.

The prepolymer and the carbon composition may be kneaded by using a conventionally known mixer such as a Henschel mixer, a tumbler mixer or a ribbon blender. However, since it is important to prevent or reduce rupture of the carbon composition such as the carbon fiber and to disperse the carbon composition, a batch type pressure kneader is used particularly preferably. The temperature in the dispersion-kneading step is preferably set to a temperature not lower the melting point of the prepolymer and not higher than the temperature at which the prepolymer is crosslinked and cured.

Next, the mixture of the prepolymer and the carbon composition is shaped under a temperature condition of not lower than the temperature at which the polyimide resin in use starts curing by heat, so that the mixture may be shaped as a resin compact of a desired shape. When an addition-reaction type polyimide resin is used as the base resin, the shaping is conducted by compression or transferring. In the compression, the mixture introduced into a mold is compressed by applying pressure.

[Roughening of substrate surface]

In the present invention, a surface of the substrate is roughened to have concavities in order to scrape a compact composed of the aforementioned carbon-composition-containing resin composition and to make a powder. The concavities are then filled with the powder of the carbon-composition-containing resin composition.

The surface can be roughened by any conventionally known method such as polishing, blasting, and etching in accordance with the material and shape of the substrate, so that the arithmetic mean roughness (Ra) may be in a range of 0.4 to 0.8.

[Formation of sliding layer]

In the method for producing the slidable structure of the present invention, the sliding layer can be formed efficiently on the roughened surface of the substrate by performing a frictional motion such as rotation and reciprocation between the roughened surface of the substrate and the compact composed of the carbon-composition-containing resin composition just like the case where the slidable structure is actually used as a sliding member. Specifically, it is possible to form a uniform sliding layer by controlling the roughness of the roughened surface on the substrate, the magnification of pressure applied between the substrate and the compact composed of the carbon-composition-containing resin composition, and the time period of the frictional motion. The sliding layer thus formed on the substrate is preferably smoothened to have arithmetic mean roughness (Ra) of less than 0.4, in a range of 0.10 to 0.35, and particularly 0.20 to 0.35.

Figs. 2 and 3 are figures to illustrate frictional motion for forming the sliding layer. Fig. 2 shows a disc-like structure. A compact 10 composed of carbon-composition-containing resin composition is placed on a pedestal 11. On this compact 10, a disc-like substrate 2 is arranged so that a roughened surface 4 is in contact with the compact 10. Then, the substrate 2 is rotated about a rotational axis 12 rotatable in the direction indicated with an arrow in the figure while the roughened surface 4 of the substrate 2 is pressed onto the compact 10. In this manner, the compact 10 is scraped by the roughened surface 4 and forms a powder. The powder is filled in the concavities of the roughened surface 4 and at the same time pressure-bonded into the concavities while being applied with friction heat, and thus, a sliding layer is formed on the disc surface. In the embodiment shown in Fig. 2, the positions of the substrate and the compact can be exchanged for rotating the compact.

Fig. 3 shows a case of a tubular structure. A columnar compact 10 composed of a carbon-composition-containing resin composition is fitted into a tubular substrate 2 having a roughened surface 4 formed on the tube inner surface. By rotating the columnar compact 10 or reciprocating it in the substrate axial direction, the compact 10 is scraped by the roughened surface 4 of the substrate 2, thereby forming a powder as in the case shown in fig. 2. The powder is filled in the concavities of the roughened surface and at the same time, it is pressure-bonded into the concavities while being applied with friction heat. In this manner, a sliding layer is formed on the inner surface of the tubular substrate.

Examples

(Sliding wear test)

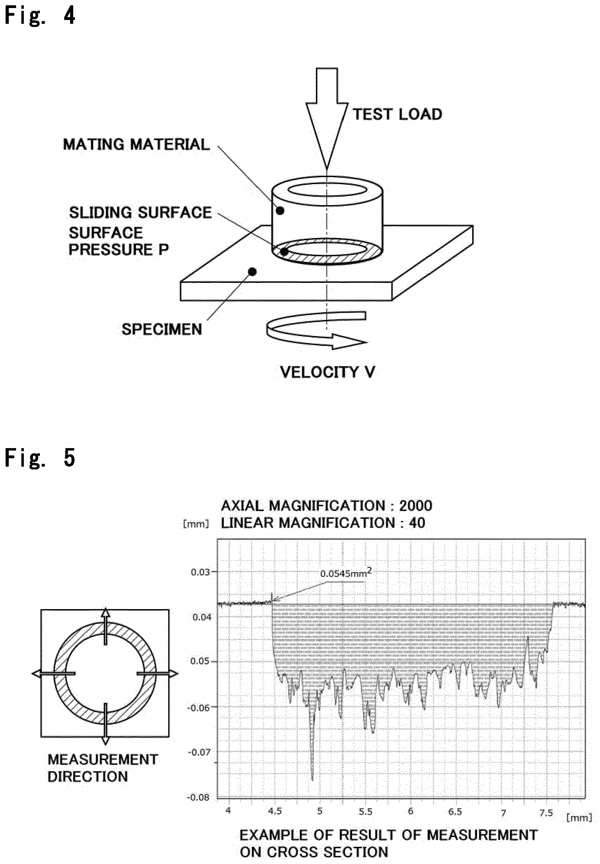

A thrust type wear tester conforming to JIS K 7218 (testing methods for sliding wear resistance of plastics) was used to measure the wear amount after moving a sample for a sliding distance of 3 km under a condition of a constant speed and a constant load by a ring-on-disc method as shown in Fig. 4, thereby calculating the specific wear amount. Limit PV value measurement condition

Test speed: 0.5 m/s
Load: 150 N (surface pressure 0.75 MPa)
300 N (surface pressure 1.50 MPa)
Mating material: S45C ring, surface roughness Ra adjusted within a range of 0.1 to 1.6 $\mu$m

Outer diameter of 25.6 mm,
Inner diameter of 20 mm
(contact area of 2 cm$^2$)

Test environment: 23$\pm$2°C, 50%RH$\pm$5%RH
Tester: friction-and-wear tester EMF-III-F supplied by A & D Company, Limited

(Measurement of specific wear amount)

The volume of wear traces after a test of sliding for 3 km under a condition of 0.5 m per second was measured with a surface texture and contour integrated measuring instrument (SURFCOM2000SD3 supplied by TOKYO SEIMITSU CO., LTD.) and the specific wear amount was calculated by the following method. Method for measuring specific wear amount

1) Cross-sectional areas at four parts of a specimen in the direction shown in Fig. 5 were measured with the surface texture and contour integrated measuring instrument, from which an average wear area S is calculated.

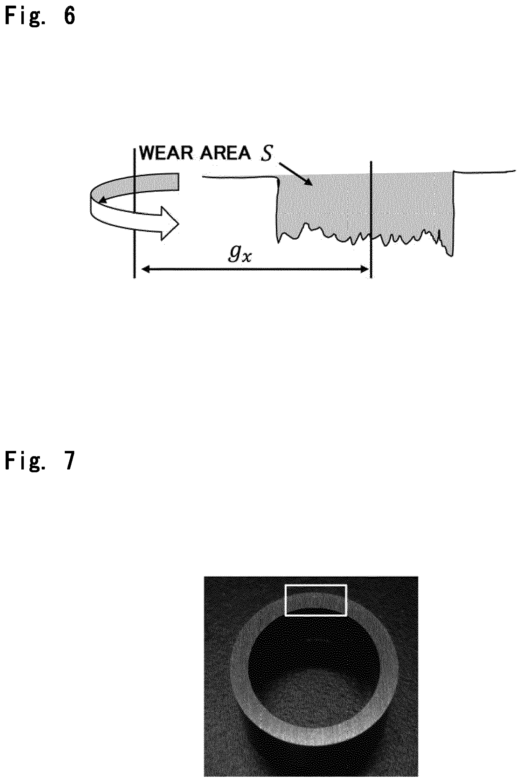

2) In Fig. 6, S denotes an average wear area and $g_x$ denotes a rotational radius as a distance from the rotational axis to an intermediate point between the ring outer diameter and the ring inner diameter. These S and $g_x$ are substituted into the following Formula (1) to calculate a wear amount V.

[Formula 1]

$$V = 2\pi g_x S \cdots (1)$$

3) Wear amount V, load W and sliding distance L are substituted in the following Formula (2) to calculate the specific wear amount W.

[Formula 2]

$$W = V/WL \; [\times 10^{-5} mm^2/(N \cdot m)] \cdots (2)$$

(Measurement of substrate surface roughness)

Surface roughness of a substrate was measured with a three-dimensional surface roughness shape measuring instrument (SURFCOM575A supplied by TOKYO SEIMITSU CO., LTD.) .

(Example 1)

42.9 parts by weight of pitch-based carbon fiber (K223HM supplied by Mitsubishi Plastics Inc.) having an average single fiber length of 200 $\mu$m was mixed with 100 parts by weight of an addition-polymerization type polyimide (PETI-330 supplied by Ube Industries, Ltd.), and the resulting mixture was melt-kneaded with a kneader under atmospheric pressure at 280°C for 30 minutes . The mixture was then cooled to room temperature to obtain a bulk molding compound (hereinafter, BMC). The BMC was split to a size to be contained in a mold for a compression molding machine, and then the BMC was held in the mold for a predetermined period of time at a temperature in a range of 280°C to 320°C to melt and soak. After that, the temperature was raised at a rate of 3°C/min to 371°C while applying pressure to 11 MPa, the BMC was then held for 1 hour and slowly cooled to obtain a plate having a diameter of 200 mm and a thickness of 3 mm. The thus obtained plate was cured at 357°C for 6 hours and cut to a desired size to obtain a specimen. Meanwhile, a S45C ring having a friction surface with a surface roughness Ra adjusted to 0.4 with sandpaper was prepared. The specimen and the S45C ring were used to conduct a sliding wear test under a condition of loading 150 N to measure the specific wear amount.

(Example 2)

The procedures were same as those in Example 1 except that the surface roughness Ra of the friction surface of the S45C was adjusted to 0.8 with sandpaper.

(Comparative Example 1)

The procedures were same as those in Example 1 except that the surface roughness Ra of the friction surface of the S45C was adjusted to 0.1 with sandpaper.

(Comparative Example 2)

The procedures were same as those in Example 1 except that the surface roughness Ra of the friction surface of the S45C was adjusted to 1.6 with sandpaper.

Table 1 shows the results of specific wear amount measurement conducted in Examples 1, 2 and Comparative Examples 1, 2. Table 1 shows also whether a sliding layer was formed on a substrate.

[Table 1]

|  | Example 1 | Example 2 | Comparative Example 1 | Comparative Example 2 |
|---|---|---|---|---|
| Substrate surface roughness Ra | 0.4 | 0.8 | 0.1 | 1.6 |
| Specific wear amount | 0.06 | 0.18 | * | 1.04 |
| Formation of sliding layer on substrate (observed at site indicated in Fig. 7) | Yes | Yes | Yes | No |
|  | Fig. 8 (A) | Fig. 8 (B) | Fig. 8 (C) | Fig. 8 (D) |
| *Test was interrupted due to increase in friction coefficient |  |  |  |  |

(Example 3)

42.9 parts by weight of pitch-based carbon fiber (K223HM supplied by Mitsubishi Plastics Inc.) having an average single fiber length of 200 $\mu$m was mixed with 100 parts by weight of an addition-polymerization type polyimide (PETI-330 supplied by Ube Industries, Ltd.), and the resulting mixture was melt-impregnated in an electric furnace under atmospheric pressure at 280°C for 30 minutes. The mixture was then cooled to room temperature to obtain BMC. The BMC was split to a size to be contained in a mold for a compression molding machine, and then the BMC was held in the mold for a predetermined period of time at a temperature in a range of 280°C to 320°C to melt and soak. After that, the temperature was raised at a rate of 3°C/min to 371°C while applying pressure to 11 MPa, the BMC was then held for 1 hour and slowly cooled to obtain a plate having a diameter of 300 mm and a thickness of 19 mm. The thus obtained plate was cured at 357°C for 6 hours and cut to a desired size to obtain a specimen. Meanwhile, a S45C ring having a friction surface with a surface roughness Ra adjusted to 0.8 with sandpaper was prepared. The specimen and the S45C ring were used to conduct a sliding wear test under a condition of loading 300 N to measure the specific wear amount.

(Example 4)

The procedures were the same as those in Example 3 except that an additional sliding wear test of 3 km was repeated twice using the ring that had been used in the sliding wear test of Example 3.

(Comparative Example 1)

42.9 parts by weight of pitch-based carbon fiber (K223HM supplied by Mitsubishi Plastics Inc.) having an average single fiber length of 200 $\mu$m was mixed with 100 parts by weight of an addition-polymerization type polyimide (PETI-330 supplied by Ube Industries, Ltd.), and the resulting mixture was melt-kneaded and melt-impregnated with a kneader under atmospheric pressure at 280°C for 30 minutes. The mixture was then cooled to room temperature to obtain BMC. The BMC was split to a size to be contained in a mold for a compression molding machine, and then the BMC was held in the mold for a predetermined period of time at a temperature in a range of 280°C to 320°C to melt and soak. After that, the temperature was raised at a rate of 3°C/min to 371°C while applying pressure to 11 MPa, the BMC was then held for 1 hour and slowly cooled to obtain a plate having a diameter of 200 mm and a thickness of 3 mm. The thus obtained plate was cured at 357°C for 6 hours and cut to a desired size to obtain a specimen. Meanwhile, a S45C ring having a friction surface with a surface roughness Ra adjusted to 0.8 with sandpaper was prepared. The specimen and the S45C ring were used to conduct a sliding wear test in water under a condition of loading 300 N to measure the specific wear amount.

(Comparative Example 4)

An addition-polymerization type polyimide (PETI-330 supplied by Ube Industries, Ltd.) was held for a predetermined period of time at a temperature in a range of 280°C to 320°C to melt and soak. After that, the temperature was raised at a rate of 3°C/min to 371°C while applying pressure to 11 MPa, the polyimide was then held for 1 hour and slowly cooled to obtain a plate having a diameter of 200 mm and a thickness of 3 mm. The thus obtained plate was cured at 357°C for 6 hours and cut to a desired size to obtain a specimen. Meanwhile, a S45C ring having a friction surface with a surface roughness Ra adjusted to 0.8 with sandpaper was prepared. The specimen and the S45C ring were used to conduct a sliding wear test under a condition of loading 300 N to measure the specific wear amount.

Table 2 shows the results of specific wear amount measurement conducted in Examples 3, 4 and Comparative Examples 3, 4, and the friction coefficient over 60 minutes. Table 2 shows also whether a sliding layer was formed on a substrate.

[Table 2]

|  | Example 3 | Example 4 | Comparative Example 3 | Comparative Example 4 |
|---|---|---|---|---|
| Sliding layer surface roughness Ra | 0.27 | 0.32 | 0.53 | 0.56 |
| Specific wear amount | 0.16 | 0.09 | 2.65 | 0.92 |
| Sliding environment | Dry | | Water immersion | Dry |
| Friction coefficient over 60 minutes | 0.22 | 0.15 | 0.18 | 0.26 |
| Formation of sliding layer on substrate (observed at site indicated in Fig. 7) | Yes | Yes | No | No |
|  | Fig. 9 (A) | Fig.9 (B) | Fig.9 (C) | Fig.9 (D) |

Industrial Applicability:

The slidable structure of the present invention has an excellent slidability, and it can be produced by forming a sliding layer on a surface of a substrate in a simple manner. Therefore, this structure can be suitably used as a general-purpose sliding member under friction conditions in a frictional motion such as reciprocation or rotation.

Explanations of Letters or Numerals:

1 Structure

2 Substrate

3 Sliding layer

4 Roughened surface

5 Powder cluster of carbon-composition-containing resin composition

10 Compact

11 Pedestal

12 Rotational axis

13 Magnified view before formation of sliding layer

14 Magnified view after formation of sliding layer

**Claims**

1. A structure comprising a sliding layer formed on a roughened surface of a substrate, wherein the sliding layer comprises a powder of a carbon-composition-containing resin composition filled in at least concavities of roughness on the roughened surface.

2. The structure according to claim 1, wherein the carbon composition is selected from the group consisting of a carbon fiber, graphite, and a powdery carbon-based material.

3. The structure according to claim 1 or 2, wherein the carbon-composition-containing resin composition contains an addition-reaction type polyimide resin as a base resin.

4. The structure according to any one of claims 1 to 3, wherein the sliding layer contains at least one selected from the group consisting of molybdenum disulfide, an ethylene tetrafluoride resin, and a metal powder.

5. The structure according to any one of claims 1 to 4, wherein the roughened surface has arithmetic mean surface roughness (Ra) in a range of 0.4 to 0.8.

6. The structure according to any one of claims 1 to 5, wherein at least the roughened surface of the substrate comprises any of stainless steel, an iron-based material, and an aluminum alloy.

7. The structure according to any one of claims 1 to 6, wherein the arithmetic mean surface roughness (Ra) of the sliding layer is less than 0.4.

8. A method for producing a structure comprising a sliding layer on a roughened surface of a substrate, the method comprising: pressure-welding a compact of a carbon-composition-containing resin composition on the roughened surface of the substrate for transferring a powder of the carbon-composition-containing resin composition onto the roughened surface so as to form the sliding layer.

9. The method according to claim 8, wherein the roughened surface and the compact of the carbon-composition-containing resin composition are rubbed with each other in the pressure-welding.

10. The method according to claim 8 or 9, wherein the roughened surface has arithmetic mean roughness (Ra) in a range of 0.4 to 0.8.

11. The method according to any one of claims 8 to 10, wherein at least the roughened surface comprises any of stainless steel, an iron-based material, and an aluminum alloy.

12. The method according to any one of claims 8 to 11, wherein the pressure-welding is conducted at a pressing force of not less than 500 kPa and a friction rate of 0.5 m/s.

Fig. 1

Fig. 2

Fig. 3

# Fig. 4

TEST LOAD

MATING MATERIAL

SLIDING SURFACE
SURFACE
PRESSURE P

SPECIMEN

VELOCITY V

# Fig. 5

AXIAL MAGNIFICATION : 2000
[mm] LINEAR MAGNIFICATION : 40

0.0545mm$^2$

MEASUREMENT
DIRECTION

EXAMPLE OF RESULT OF MEASUREMENT
ON CROSS SECTION

Fig. 6

Fig. 7

Fig. 8

(A)

(B)

(C)

(D)

# Fig. 9

(A)

(B)

(C)

(D)

<div align="center">

**INTERNATIONAL SEARCH REPORT**

</div>

| | International application No. |
|---|---|
| | PCT/JP2017/020486 |

**A. CLASSIFICATION OF SUBJECT MATTER**
*F16C33/10*(2006.01)i, *F16C33/20*(2006.01)i

According to International Patent Classification (IPC) or to both national classification and IPC

**B. FIELDS SEARCHED**

Minimum documentation searched (classification system followed by classification symbols)
F16C33/10, F16C33/20

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2009-156295 A  (NTN Corp.),<br>16 July 2009 (16.07.2009),<br>paragraphs [0015], [0017] to [0018], [0020] to [0022], [0040], [0042] to [0044], [0047], [0053]; table 2; fig. 1 to 3, 5<br>(Family: none) | 1-7<br>5,7<br>8-12 |
| X<br>Y<br>A | JP 2013-204807 A  (Taiho Kogyo Co., Ltd.),<br>07 October 2013 (07.10.2013),<br>paragraphs [0001], [0012], [0020] to [0024], [0027] to [0029], [0034] to [0038], [0054], [0063]; table 1; fig. 1 to 2<br>(Family: none) | 1-4,6-8,11<br>5<br>9-10,12 |

| ☒ | Further documents are listed in the continuation of Box C. | ☐ | See patent family annex. |
|---|---|---|---|

| | |
|---|---|
| * Special categories of cited documents:<br>"A" document defining the general state of the art which is not considered    to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 09 August 2017 (09.08.17) | 22 August 2017 (22.08.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

## INTERNATIONAL SEARCH REPORT

International application No.

PCT/JP2017/020486

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2008-240785 A  (Daido Metal Co., Ltd.),<br>09 October 2008 (09.10.2008),<br>paragraphs [0001], [0009] to [0011], [0016],<br>[0021] to [0024]; fig. 3 to 4<br>& US 2008/0241515 A1<br>paragraphs [0002], [0012] to [0014], [0019],<br>[0031] to [0034]; fig. 3 to 4<br>& GB 2448067 A          & DE 102008015790 A1 | 1-6<br>7<br>8-12 |
| A | JP 2000-136397 A  (Taiho Kogyo Co., Ltd.),<br>16 May 2000 (16.05.2000),<br>(Family: none) | 1-12 |
| A | JP 7-247493 A  (Toyota Motor Corp.),<br>26 September 1995 (26.09.1995),<br>(Family: none) | 1-12 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011127636 A
- JP 2009079766 A

- JP 2011080525 A